# EUROPEAN PATENT SPECIFICATION

(11) **EP 3 958 186 B1**
(45) Date of publication and mention of the grant of the patent: **09.12.2026**
(21) Application number: 20191667.3
(22) Date of filing: 19.08.2020
(51) Int. Cl.: G06N 7/01, B60W 50/04, G01S 13/931, G01S 7/40, G01S 7/497, G01S 13/86, G01S 17/931

(54) **USE OF BAYESIAN NETWORK FOR DETECTING SENSOR BLOCKAGE**
VERWENDUNG EINES BAYESISCHEN NETZWERKS ZUR ERKENNUNG VON SENSORBLOCKIERUNG
UTILISATION D'UN RÉSEAU BAYÉSIEN POUR DÉTECTER UN BLOCAGE DE CAPTEUR

(43) Date of publication of application: 23.02.2022
(73) Proprietor: Bayerische Motoren Werke Aktiengesellschaft, 80809 München (DE)
(72) Inventor: Parolini, Luca, 84032 Landshut (DE); Schneider, Sebastian, 85622 Feldkirchen (DE)

(56) References cited:
- EP-A1- 3 511 740

## Description

The present invention is directed to a method for generating a Bayesian network configured to detect blockage of a plurality of sensors of a vehicle, a method for detecting sensor blockage using the Bayesian network, a control device configured to carry out at least one of the methods and a vehicle being equipped with the control device.

The present invention deals with the problem of identifying blockage of sensors installed at a vehicle.

Sensor data are used for creating an abstract, unified, representation of an environment around the vehicle, e.g. a car. Such a representation is called environment model. An accuracy of the environment model is important in order to guarantee safety of the vehicle and also of the passengers of the vehicle.

A sensor is blocked if its field of view is limited due to environmental effects not related to presence of other entities, either moving or static, present in a field of view of the sensor. For example, a limitation of a sensor's field of view due to a truck moving nearby the vehicle is not a blockage, whereas the reduction of a sensor's field of view, e.g. a lidar sensor, due to snow or salt in front of the sensor is a blockage. Environmental conditions that are typically associated with a blockage of a sensor are snow, fog, rain, and direct sun light. Mud is also a typical source of blockage.

The limited field of view of a sensor due to blockage thereof must be considered when creating the environment model. In particular, if a sensor is blocked and its limitation is not considered in the process of creating the environment model, areas defined as free could be occupied by obstacles that could not be observed by the blocked sensor. Thus, blockage recognition is a key topic for safety in autonomous and automated driving.

Sensors offer some basic techniques in order to automatically detect blockage. However, due to limits in technologies of the sensors, the detection of an actual blockage is often rather limited and might not meet safety-related requirements. For example, sensors may require multiple seconds before recognizing that their field of view is limited due to blockage.

In EP 3511740 A1 a method for determining a blockage of a sensor of a plurality of sensors of an ego vehicle is described. The method comprises determining a prior blockage probability of the sensor of the plurality of sensors, receiving sensor data of the sensor of the plurality of sensors, determining a performance of the sensor based on the received sensor data, calculating a posterior blockage probability based on the prior blockage probability of the sensor and the performance of the sensor, and determining the blockage of the sensors using the calculated posterior blockage probability.

In the light of this state of the art, one object of the present invention is to provide an enhanced method for detecting sensor blockage for sensors installed at a vehicle.

The object is solved by the features of the independent claims. The dependent claims contain preferred further developments of the invention.

More specifically, the object is solved by a method for generating a Bayesian network configured to detect blockage of a plurality of sensors of a vehicle.

A Bayesian network, Bayes network, or probabilistic directed acyclic graphical model is a probabilistic graphical model, i.e. a type of statistical model, that represents a set of variables and their conditional dependencies via a directed acyclic graph.

The Bayesian network comprises nodes representing variables in the Bayesian sense: they may be observable quantities, latent variables, unknown parameters or hypotheses. Edges represent conditional dependencies; nodes that are not connected, i.e. no path connects one node to another, represent variables that are conditionally independent of each other. Each node is associated with a probability function that takes, as input, a particular set of values for the node's parent variables, and gives as output the probability or probability distribution, if applicable, of the variable represented by the node.

The method includes setting a set of a priori probabilities and a set of conditional probabilities, and generating a Bayesian network based on the set of a priori probabilities and the set of conditional probabilities.

The set of a priori probabilities includes an a priori probability that a target exists in a field of view of at least one, some or all of the plurality of sensors, for each one of the plurality of sensors, respectively, an a priori probability that the sensor is blocked, and, for each one of the plurality of sensors, respectively, an a priori probability that the sensor is not blocked.

The set of conditional probabilities is set for each one of the plurality of sensors, respectively.

The set of conditional probabilities each comprises a probability that the sensor of the plurality of sensors will detect and not detect the target in the sensor's field of view among all possible combinations of blocked and unblocked sensor and presence or absence of the target in the sensor's field of view.

For example, the conditional probabilities define a probability that the sensor of the plurality of sensors detects the target in his field of view when there is no target to be detected and the sensor is blocked. Another example is that the conditional probabilities define a probability that the sensor of the plurality of sensors detects the target in his field of view when there is a target to be detected and the sensor is not-blocked.

That is, the set of conditional probabilities include a probability for each possible combination of conditions (sensor blocked & target actually in the field of view of the sensor, sensor blocked & target actually not in the field of view of the sensor, sensor not blocked & target actually in the field of view of the sensor, and sensor not blocked & target actually not in the field of view of the sensor) and of a possible output (target detected, and target not detected) of the respective sensor under the respective combination of conditions.

At least a part of the set of a priori probabilities and/or the set of conditional probabilities can be determined based on historical data. For example, historical data, i.e. knowledge, about typical traffic density in certain areas of a highway during certain time of a day and/or certain days of a year can be used for selecting a priori values of a target existence probability. In other cases, historical data about how often a certain type of sensor is blocked over its usage lifetime can be used for selecting a priori values of sensor blockage.

The historical data contain information about conditions under which the at least one, some or all of the plurality of sensors was/were blocked in the past, i.e. before the actual time of computing the probability of sensor blockage.

At least a part of the set of a priori probabilities and/or the set of conditional probabilities can be determined based on at least one environmental condition in an environment of the vehicle. The at least one environmental condition can contain information about snow, fog, rain, light conditions, such as direct sun light, and/or mud having an impact on the field of view of at least one, some, or all of the sensors of the plurality of sensors.

At least a part of the set of a priori probabilities and/or the set of conditional probabilities can be determined based on map data corresponding to the field of view of at least one, some, or all of the plurality of sensors.

It is possible to determine in a first step an actual position of the vehicle, e.g. by making use of a Global Positioning System (GPS). In a second step, it is possible to determine based on the actual position of the vehicle and the map data if an object, e.g. a static object such as a traffic sign, is in the field of view of at least one, some, or all of the plurality of sensors and should be detected by the at least one, some, or all of the plurality of sensors. In a third step, it is possible to determine the a priori probabilities and/or the conditional probabilities based on a result if the at least one, some, or all of the plurality of sensors detected the object or not.

Generating the Bayesian network can comprise generating parent nodes including a blockage-node for each one of the plurality of sensors and a target node, and child nodes including an output node for each one of the sensors.

The blockage node can be generated for each one of the plurality of sensors, respectively, based on the a priori probability that the sensor is blocked, which is set for each one of the plurality of sensors, respectively, and the a priori probability that the sensor is not blocked, which is also set for each one of the plurality of sensors, respectively.

The target node can be generated based on the a priori probability that the target exists in the field of view of the at least one, some or all of the plurality of sensors.

The output node can be generated for each one of the plurality of sensors, respectively, based on the set of conditional probabilities, the a priori probability that the sensor is blocked, which is set for each one of the plurality of sensors, respectively, and the a priori probability that the sensor is not blocked, which is set for each one of the plurality of sensors, respectively, and the a priori probability that the target exists in the field of view of the at least one, some, or all of the plurality of sensors.

Generating the Bayesian network can further comprise generating edges connecting the respective blockage-node of one sensor to the respective output node of the one sensor and connecting the target node to all child nodes.

Furthermore, a method for detecting sensor blockage using the Bayesian network configured to detect blockage of the plurality of sensors of the vehicle and generated with the above described method is provided.

The method for detecting sensor blockage can be carried out online, i.e. during normal use of the vehicle, and the method of generating the Bayesian network can be carried out offline, i.e. during development of the vehicle.

The method for detecting sensor blockage includes inputting into the Bayesian network information corresponding to an output of one of the plurality of sensors indicating if the sensor detected a target or not. This is done for every sensor, respectively. The method for detecting sensor blockage includes computing, using the Bayesian network, a probability that at least one, some, or all of the sensors is/are blocked, and a probability that a target exists in a field of view of at least one, some, or all of the plurality of sensors, and outputting an information corresponding to the computed probabilities to the vehicle comprising the plurality of sensors.

The method for detecting sensor blockage can further include generating an environment model based on the information output to the vehicle, the information corresponding to the computed probabilities.

The method for detecting sensor blockage can further include controlling the vehicle based on the information output to the vehicle, the information corresponding to the computed probabilities.

Furthermore, a control device comprising a central blockage detection unit configured to carry out at least one of the above described methods is provided.

Furthermore, a vehicle, e.g. a car, being equipped with the control device and being configured to be controlled by the control device is provided.

**In** the following a description of an embodiment of present invention is given with respect to figures 1 to 3.
- Fig. 1: depicts a flowchart of a method for generating a Bayesian network configured to detect blockage of a plurality of sensors of a vehicle.
- Fig. 2: depicts the Bayesian network generated by the method of figure 1.
- Fig. 3: depicts a flowchart of a method for detecting sensor blockage using the Bayesian network of figure 1 and 2.

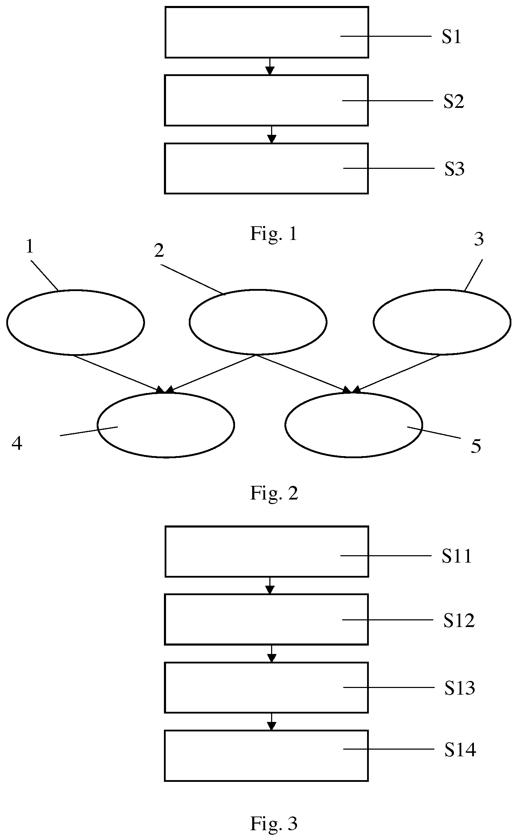

The method for generating the Bayesian network configured to detect blockage of a plurality of sensors of a vehicle comprises three steps S1 - S3, as can be gathered from the flowchart shown in figure 1.

A control device comprising a central blockage detection unit can be provided at the vehicle, wherein the central blockage detection unit is configured to carry out the method for generating the Bayesian network. The control device comprises an input interface and an output interface, both connected to the central blockage detection unit. The central blockage detection unit comprises a central processing unit and a storage. In the storage a computer program is stored which is configured to cause the central processing unit to carry out the steps S1-S3 for generating the Bayesian network. These steps S1-S3, which are normally carried out during a so-called offline mode of the central blockage detection unit (e.g. during development of the vehicle), will be explained in detail in the following. It is also possible that the control device is not physically arranged in or at the vehicle itself, but is a remote control unit configured to receive and/or send data, i.e. information, from and to the vehicle, e.g. wirelessly.

The method of figure 1 includes setting a set of a priori probabilities including an a priori probability that a target exists in a field of view of at least one, some, or all of the plurality of sensors; for each one of the plurality of sensors, respectively, an a priori probability that the sensor is blocked; and for each one of the plurality of sensors, respectively, an a priori probability that the sensor is not blocked. The method further includes setting a set of conditional probabilities for each one of the plurality of sensors, respectively. The conditional probabilities depend on the probability that the sensor of the plurality of sensors detects a target in his field of view, when the sensor is blocked; a conditional probability that the sensor of the plurality of sensors does not detect the target in his field of view, when the sensor is blocked, a conditional probability that the sensor of the plurality of sensors detects the target in his field of view, when the sensor is not blocked; and a conditional probability that the sensor of the plurality of sensors does not detect the target in his field of view, when the sensor is not blocked. The method further includes generating a Bayesian network based on the set of a priori probabilities and the set of conditional probabilities.

More specifically, in a first step S1 of the method the set of a priori probabilities is defined. In a second step S2 of the method the set of conditional probabilities is defined. In a third step S3 of the method the Bayesian network is generated based on the defined set of a priori probabilities and the defined set of conditional probabilities. The first and the second step S1, S2 are carried out before the third step S3 is carried out. However, the first and the second step S1, S2 may be carried out simultaneously, the first step S1 before the second step S2, or vice versa.

In the present embodiment it is assumed that the only information given by the plurality of sensors is whether they detect something, or not. Information such as existence probability of a target in the field of view of one, some or all of the plurality of sensors, location about where a target is/was detected, time of detection etc. is neglected, but can be incorporated at the cost of a more complex model.

In the present embodiment a target is anything that a sensor of the plurality of sensors can detect, e.g. cars, trucks, pedestrians, traffic signs, etc. If a sensor of the plurality of sensors detects a target, the sensor's output takes the value "Detected". If a sensor of the plurality of sensors does not detect a target, the sensor's output takes the value "NotDetected". A target can either exist, or not exist. In the present embodiment, it is assumed that at most one target is present, but more targets can be incorporated at the cost of a more complex model.

In the present embodiment, each sensor of the plurality of sensors can be either blocked and take a value "Blocked", or not blocked and take a value "NotBlocked".

In the present embodiment, a case is considered where the vehicle is equipped with two sensors, i.e. a first sensor being a light detection and ranging (lidar) sensor and a second sensor being a radio detection and ranging (radar) sensor.

As already stated above, in the first step S1 the a priori probabilities are defined. Here, the a priori probability that a target exists in a field of view of both sensors is defined, and the a priori probability that the sensor is blocked is defined for both sensors, respectively.

The a priori probability that a target exists in a field of view of both sensors can be set to 0,5, and the a priori probability that the sensor is blocked can be set for both sensors, respectively, to 0,5. In other words, the probability that a target exists in a field of view of both, the lidar and the radar sensor, can be set to 0,5. The probability that the lidar or radar sensor is blocked can be set to 0,5, respectively.

The above described set of a priori probabilities may be set as follows:
In [8] 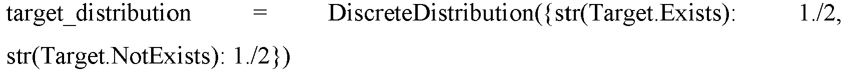 target_distribution = DiscreteDistribution({str(Target.Exists): 1./2, str(Target.NotExists): 1./2}) 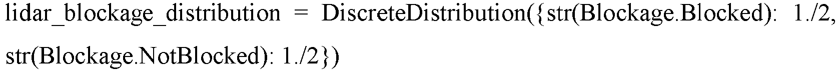 lidar_blockage_distribution = DiscreteDistribution({str(Blockage.Blocked): 1./2, str(Blockage.NotBlocked): 1./2}) 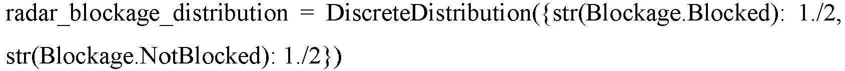 radar_blockage_distribution = DiscreteDistribution({str(Blockage.Blocked): 1./2, str(Blockage.NotBlocked): 1./2})

This is a so-called wort case scenario, since all a priori distributions are set to 0,5. This implies that the lidar and the radar sensor have an equal probability of being blocked, or not. Also, the target has an equal probability of existing, or not. Therefore, the selected case represents a worst-case scenario, since the a priori distribution gives no indication about what the most likely event is (e.g., a target exists and sensors are not blocked).

However, it is also possible to define these a priori probabilities as conditional probabilities, e.g. under the assumption that it is raining, the a priori probability that the sensor(s) is/are blocked may be set to a value exceeding 0,5.

Moreover, in the present embodiment, a detection quality of each one of the plurality of sensors, here the two sensors, is available and modelled by a set of conditional probabilities.

Therefore, in the above mentioned second step S2 of the method the set of conditional probabilities is defined. As already explained above, the second step S2 may carried out before, simultaneously and/or after the first step S1.

In the present embodiment, the following set of conditional probabilities is defined and set in the second step S2:
- Under the assumption, i.e. condition, that a sensor of the plurality of sensors is not blocked, i.e. nominal performance, a probability that the sensor will detect a target given that the target exists, i.e. probability of detection (Pd), and the probability that it will detect a target given that the target does not exist, i.e. probability of false alarm (Pfa), are set. This information is typically provided by a manufacturer of the sensor or may be estimated from test campaigns, i.e. historical data.
- Under the assumption, i.e. condition, that a sensor of the plurality of sensors is blocked, a probability that the sensor will detect a target given that the target exists, i.e. probability of detection (Pd), and a probability that the sensor will detect a target given that the target does not exist, i.e. probability of false alarm (Pfa), are set. This information is needed by the Bayesian network approach. In practice, these probability values are often unknown. Typically, if a sensor is blocked it detects nothing. In this case low values may be set to both, Pd and Pfa. These values could be set to 0, but this can lead to numerical problems when solving the a posteriori distribution. Therefore, in a preferred embodiment, the probability of detection Pd and the probability of false alarm Pfa are set to (very) low values, but not exactly to zero.

In the present embodiment, the two sensors have identical Key-Performance-Indicators (KPIs), i.e. have the same probability of detection (Pd) and the same probability of false alarm (Pfa) in the not-blocked and the blocked state.

The probability of detection (Pd) in the not-blocked state can be set for both sensors to 0,95, and the probability of false alarm (Pfa) in the blocked state can be set for both sensors to 0,01.

The above described conditional probabilities can be set as follows:

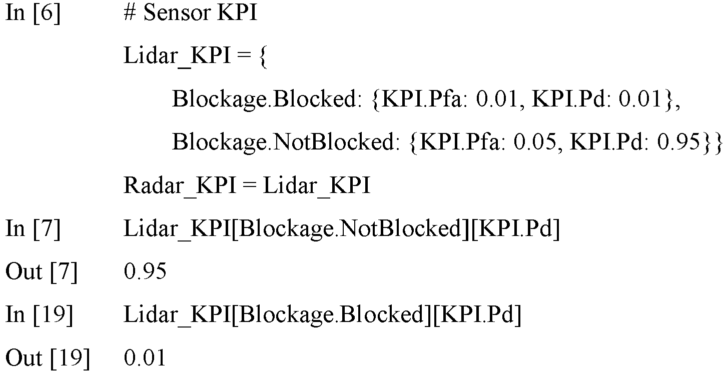

Based on the set of a priori probabilities and the set of conditional probabilities defined in the above described first and second step S1, S2, the Bayesian network is generated in the third step S3. The Bayesian network generated in the third step S3, is shown in figure 2.

In the present embodiment three parent nodes 1, 2, 3 and two child nodes 4, 5 are generated.

The three parent nodes 1, 2, 3 include a radar-blockage-node 1 generated based on the a priori probability that the radar sensor is blocked or not blocked, a target node 2 generated based on the a priori probability that a target exists in the field of view of both sensors, and a lidar-blockage-node 3 generated based on the a priori probability that the lidar sensor is blocked or not blocked.

The two child nodes include a radar-output node 4 and a lidar-output node 5.

The radar-output node 4 is generated based on the above described set of conditional probabilities, the a priori probability that a target exists in the field of view of both sensors, and the a priori probability that the radar sensor is blocked or not blocked.

The lidar-output node 5 is generated based on the above described conditional probabilities, the a priori probability that a target exists in the field of view of both sensors, and the a priori probability that the lidar sensor is blocked or not blocked.

Then edges are added connecting the radar-blockage node 1 and the radar-output node 4, the target node 2 and the radar-output node 4, the target node 2 and the lidar-output node 5, and the lidar-blockage node 3 and the lidar-output node 5.

The above described generating of the Bayesian network in the third step S3 may implemented as follows:

```
 In [10] lidar_probability_table = create_sensor_conditional_table(Lidar_KPI)
           lidar_distribution = ConditionalProbabilityTable(
               lidar_probability_table,
               [target_distribution, lidar_blockage_distribution])
           radar_probability_table = create_sensor_conditional_table(Radar_KPI)
           radar_distribution = ConditionalProbabilityTable(
               radar_probability_table,
               [target _distribution, radar_blockage_distribution])
            # Create the Bayesian network
            target_node = Node(target _distribution, name="Target")
            radar_blockage_node = Node(radar_blockage_distribution,
            name"RadarBlockage")
            radar _output_node = Node(radar_distribution, name="RadarOutput")
            lidar_blockage_node = Node(lidar_blockage_distribution,
            name="LidarBlockage")
            lidar_output_node = Node(lidar_distribution, name="LidarOutput")
            model = BayesianNetwork("Central blockage detection problem")
            model. add_states(target_node, radar_blockage_node, lidar_blockage_node,
            radar_output_node, lidar_output_node)
            model. add_edge(target_node, radar_output_node)
            model. add_edge(radar_blockage_node, radar_output_node)
            model. add_edge(target_node, lidar_output_node)
            model. add_edge(lidar_blockage_node, lidar_output_node)
            model.bake ()
```

In the following a method for using the Bayesian network generated with the method shown in figure 1 and shown in figure 2 is described with reference to figure 3. Additionally or alternatively, the above described central blockage detection unit can be configured to carry out the method shown in figure 3.

The central blockage detection unit is provided in or at the vehicle which is equipped with the above described configuration of sensors including the radar and the lidar sensor.

As described above, in the present embodiment it is assumed that the only measurement information given by the two sensors is whether they detect something, or not.

Therefore, a method for using the Bayesian network comprises in a first step S11 inputting if the sensors have detected a target or not for every sensor, respectively.

In a second step S12 the Bayesian network and typical probability rules are used for computing the probability that one of the sensors is blocked, wherein this is done for every one of the two sensors, and for computing the probability that a target exists in the field of view of each one of the plurality of, here two, sensors.

When, in a first case, the radar and the lidar sensor both detect a target, the Bayesian network sets the probability of blockage of the two sensors to values being below a predefined threshold value. In this case, the central blockage detection unit would classify both sensors as not blocked. The Bayesian network sets the probability that a target exists in the field of view of each one of the plurality of sensors high, e.g. 1,0.

When, in a second case, the radar sensor detects a target and the lidar sensor does not detect the target, the Bayesian network sets the probability of the lidar sensor being blocked to a value being above the predefined threshold value and for the radar sensor to a value being below the predefined threshold value. In this case, the central blockage detection unit would classify the lidar sensor as being blocked and the radar sensor as not blocked. The Bayesian network sets the probability that a target exists in the field of view of each one of the plurality of sensors lower than in the first case.

When, in a third case, the lidar sensor detects a target and the radar sensor does not detect the target, the Bayesian network sets the probability of the radar sensor being blocked to a value being above the predefined threshold value and for the lidar sensor to a value being below the predefined threshold value. In this case, the central blockage detection unit would classify the radar sensor as being blocked and the lidar sensor as not blocked. The Bayesian network sets the probability that a target exists in the field of view of each one of the plurality of sensors lower than in the first case and to the same value as in the second case.

When, in a fourth case, the radar and the lidar sensor both do not detect a target, the Bayesian network sets the probability that a target exists in the field of view of each one of the plurality of sensors lower than in the second and the third case. Furthermore, the Bayesian network sets the probability of blockage of the two sensors to values being above the predefined threshold value. In this case, the central blockage detection unit would classify both sensors as being blocked.

This can be explained by considering that when no sensor detects anything, the Bayesian network has in the present embodiment no information to recognize if both sensors are blocked and hence, cannot detect an existing target, or they are not blocked and no target exists. In this example, the a priori probability leads the Bayesian network to slightly higher probabilities that sensors are blocked.

The fourth case can be made less unsure by including information from the environment of the vehicle. For example, when a map available to the vehicle shows that traffic signs are along a road in the field of view of one or both sensors, then the existence of a target can be assumed to be known and this should increases the probability that the radar and the lidar sensor are blocked, when one or both did not detect the traffic sign.

In a third step S13 a result corresponding to the probabilities computed in the second step S12 is output to the vehicle.

In a fourth step S14 the vehicle generates an environment model. The environment model being an abstract, unified, representation of the environment around the vehicle and may be used for controlling the vehicle, e.g. for planning a trajectory of the, e.g. autonomous driving, vehicle.

The scenario discussed in the present embodiment shows that the approach according to the present invention can be used for inferring blockage of sensors. The output is probabilistic and the distribution offers a detailed information about the blockage. For example, a control device comprising the central blockage detection unit configured to carry out the method described with respect to figure 3 can provide a discrete level of likely blockage (e.g., not blocked, may blocked, blocked) for each sensor, respectively. Moreover, most of the data required for modelling the Bayesian network are available from specifications of the sensors and/or can be derived from historical data.

Furthermore, the above described embodiment can be extended in order to account for uncertainty about a validity of the map used by the vehicle (e.g., existence of targets that the map says should be available such as traffic signs), time correlations among measurements (e.g. if a sensor saw no targets over the last n cycles, then the probability of being blocked should increase), and/or measurement correlation among sensors (e.g. a target which is difficult to be detected by lidar due to its low reflectivity may also be difficult to be detected by a radar).

The above described embodiment exceeds minimal requirements for features of central blockage detection, since under every condition, it allows to compute the probability that each of the sensors is blocked. Also, additional environmental information can be explicitly modelled in the network and used for improving accuracy of blockage estimation.

### Reference signs list

- 1: radar-blockage node
- 2: target node
- 3: lidar-blockage node
- 4: radar-output node
- 5: lidar-output node
- S1-S3: steps of the method for generating the Bayesian network
- S11-S14: steps of the method for detecting sensor blockage

## Claims

1. A method for generating a Bayesian network configured to detect blockage of a plurality of sensors of a vehicle, each sensor of the plurality of sensors having a field of view, wherein each sensor is considered blocked if the corresponding field of view of the sensor is limited due to at least one environmental condition, which is not related to the presence of other entities,
in an environment of the vehicle and wherein the method includes:
determining (S1) a set of a priori probabilities based on historical data and/or map data corresponding to the field of view of at least one, some, or all of the plurality of sensors, wherein the historical data are indicative of conditions under which at least one sensor of the plurality of sensors was blocked in the past and wherein the set of a priori probabilities includes
an a priori probability that a target exists in a field of view of at least one, some or all of the plurality of sensors,
for each one of the plurality of sensors, respectively, an a priori probability that the sensor is blocked, and
for each one of the plurality of sensors, respectively, an a priori probability that the sensor is not blocked,
determining (S2) a set of conditional probabilities based on the at least one environmental condition in an environment of the vehicle, each of the conditional probabilities comprising a probability that the sensor of the plurality of sensors will detect and not detect the target in the sensor's field of view among all possible combinations of blocked and unblocked sensor and presence or absence of the target in the sensor's field of view, and
generating (S3) the Bayesian network based on the set of a priori probabilities and the set of conditional probabilities.

2. The method according to claim 1, wherein at least a part of the set of a priori probabilities and/or the set of conditional probabilities are determined based on historical data.

3. The method according to anyone of claims 1 to 2, wherein at least a part of the set of a priori probabilities and/or the set of conditional probabilities are determined based on map data corresponding to the field of view of at least one, some or all of the plurality of sensors.

4. The method according to anyone of claims 1 to 3, wherein generating (S3) the Bayesian network comprises:
generating parent nodes (1, 2, 3) including a blockage-node (1, 3) for each one of the plurality of sensors and a target node (2), and child nodes (4, 5) including an output node (4, 5) for each one of the sensors,
wherein the blockage node (1, 3) is generated for each one of the plurality of sensors, respectively, based on the a priori probability that the sensor is blocked, which is set for each one of the plurality of sensors, respectively, and the a priori probability that the sensor is not blocked, which is set for each one of the plurality of sensors, respectively,
wherein the target node (2) is generated based on the a priori probability that the target exists in the field of view of the at least one, some, or all of the plurality of sensors, and
wherein the output node (4,5) is generated for each one of the plurality of sensors, respectively, based on the set of conditional probabilities, the a priori probability that the sensor is blocked, which is set for each one of the plurality of sensors, respectively, and the a priori probability that the sensor is not blocked, which is set for each one of the plurality of sensors, respectively, and the a priori probability that the target exists in the field of view of at least one, some or all of the plurality of sensors,
generating edges connecting the respective blockage-node (1, 3) of one sensor to the respective output node (4, 5) of the one sensor, and connecting the target node (2) to all child nodes (4, 5).

5. A method for detecting sensor blockage using the Bayesian network configured to detect blockage of the plurality of sensors of the vehicle and generated with the method according to anyone of claims 1 to 4, wherein the method for detecting sensor blockage includes:
inputting (S11) into the Bayesian network information corresponding to an output of one of the plurality of sensors indicating if the sensor detected a target or not for every sensor, respectively,
computing (S12), using the Bayesian network, a probability that one of the sensors is blocked, and a probability that a target exists in a field of view of at least one, some or all of the plurality of sensors, and
outputting (S13) an information corresponding to the computed probabilities to the vehicle comprising the plurality of sensors.

6. The method according to claim 5, wherein the method further includes:
generating (S 14) an environment model based on the information output to the vehicle, the information corresponding to the computed probabilities.

7. The method according to claim 5 or 6, wherein the method further includes:
controlling the vehicle based on the information output to the vehicle, the information corresponding to the computed probabilities.

8. A control device comprising a central blockage detection unit configured to carry out the method according to anyone of claims 1 to 4 and/or the method according to anyone of claims 5 to 7.

9. A vehicle being equipped with the control device and being configured to be controlled by the control device according to claim 8.

## Patentansprüche

1. Verfahren zur Erzeugung eines Bayes'schen Netzwerks, das dazu ausgelegt ist, eine Blockade einer Mehrzahl von Sensoren eines Fahrzeugs zu erkennen, wobei jeder Sensor der Mehrzahl von Sensoren ein Sichtfeld aufweist, wobei jeder Sensor als blockiert gilt, wenn das entsprechende Sichtfeld des Sensors aufgrund mindestens einer Umgebungsbedingung, die nicht mit der Anwesenheit anderer Entitäten zusammenhängt, in einer Umgebung des Fahrzeugs eingeschränkt ist, und wobei das Verfahren umfasst:
Bestimmen (S1) eines Satzes von A-priori-Wahrscheinlichkeiten auf Grundlage von historischen Daten und/oder Kartendaten, die dem Sichtfeld mindestens eines, einiger oder aller der Mehrzahl von Sensoren entsprechen, wobei die historischen Daten Bedingungen angeben, unter welchen mindestens ein Sensor der Mehrzahl von Sensoren in der Vergangenheit blockiert war, und wobei der Satz von A-priori-Wahrscheinlichkeiten umfasst:
eine A-priori-Wahrscheinlichkeit, dass ein Ziel in einem Sichtfeld mindestens eines, einiger oder aller der Mehrzahl von Sensoren vorhanden ist,
für jeden der Mehrzahl von Sensoren jeweils eine A-priori-Wahrscheinlichkeit, dass der Sensor blockiert ist, und
für jeden der Mehrzahl von Sensoren jeweils eine A-priori-Wahrscheinlichkeit, dass der Sensor nicht blockiert ist,
Bestimmen (S2) eines Satzes von bedingten Wahrscheinlichkeiten auf Grundlage der mindestens einen Umgebungsbedingung in einer Umgebung des Fahrzeugs, wobei jede der bedingten Wahrscheinlichkeiten eine Wahrscheinlichkeit umfasst, dass der Sensor der Mehrzahl von Sensoren das Ziel in dem Sichtfeld des Sensors erkennt und nicht erkennt, unter allen möglichen Kombinationen von blockiertem und nicht blockiertem Sensor und Anwesenheit oder Abwesenheit des Ziels in dem Sichtfeld des Sensors, und
Erzeugen (S3) des Bayes'schen Netzwerks auf Grundlage des Satzes von A-priori-Wahrscheinlichkeiten und des Satzes von bedingten Wahrscheinlichkeiten.

2. Verfahren nach Anspruch 1, wobei mindestens ein Teil des Satzes von A-priori-Wahrscheinlichkeiten und/oder des Satzes von bedingten Wahrscheinlichkeiten auf Grundlage von historischen Daten bestimmt wird.

3. Verfahren nach einem der Ansprüche 1 bis 2, wobei mindestens ein Teil des Satzes von A-priori-Wahrscheinlichkeiten und/oder des Satzes von bedingten Wahrscheinlichkeiten auf Grundlage von Kartendaten bestimmt wird, die dem Sichtfeld mindestens eines, einiger oder aller der Mehrzahl von Sensoren entsprechen.

4. Verfahren nach einem der Ansprüche 1 bis 3, wobei das Erzeugen (S3) des Bayes'schen Netzwerks umfasst:
Erzeugen von Elternknoten (1, 2, 3), umfassend einen Blockade-Knoten (1, 3) für jeden der Mehrzahl von Sensoren und einen Zielknoten (2), und von Kindknoten (4, 5), umfassend einen Ausgabeknoten (4, 5) für jeden der Sensoren,
wobei der Blockade-Knoten (1, 3) für jeden der Mehrzahl von Sensoren jeweils auf Grundlage der A-priori-Wahrscheinlichkeit, dass der Sensor blockiert ist, welche für jeden der Mehrzahl von Sensoren jeweils festgelegt ist, und der A-priori-Wahrscheinlichkeit, dass der Sensor nicht blockiert ist, welche für jeden der Mehrzahl von Sensoren jeweils festgelegt ist, erzeugt wird,
wobei der Zielknoten (2) auf Grundlage der A-priori-Wahrscheinlichkeit, dass das Ziel in dem Sichtfeld des mindestens einen, einiger oder aller der Mehrzahl von Sensoren vorhanden ist, erzeugt wird, und
wobei der Ausgabeknoten (4, 5) für jeden der Mehrzahl von Sensoren jeweils auf Grundlage des Satzes von bedingten Wahrscheinlichkeiten, der A-priori-Wahrscheinlichkeit, dass der Sensor blockiert ist, welche für jeden der Mehrzahl von Sensoren jeweils festgelegt ist, und der A-priori-Wahrscheinlichkeit, dass der Sensor nicht blockiert ist, welche für jeden der Mehrzahl von Sensoren jeweils festgelegt ist, und der A-priori-Wahrscheinlichkeit, dass das Ziel in dem Sichtfeld mindestens eines, einiger oder aller der Mehrzahl von Sensoren vorhanden ist, erzeugt wird,
Erzeugen von Kanten, welche den jeweiligen Blockade-Knoten (1, 3) eines Sensors mit dem jeweiligen Ausgabeknoten (4, 5) des einen Sensors verbinden, und welche den Zielknoten (2) mit allen Kindknoten (4, 5) verbinden.

5. Verfahren zum Erkennen einer Sensorblockade unter Verwendung des Bayes'schen Netzwerks, das dazu ausgelegt ist, eine Blockade der Mehrzahl von Sensoren des Fahrzeugs zu erkennen, und das mit dem Verfahren nach einem der Ansprüche 1 bis 4 erzeugt wurde, wobei das Verfahren zum Erkennen einer Sensorblockade umfasst:
Eingeben (S11) in das Bayes'sche Netzwerk von Informationen, die einer Ausgabe eines der Mehrzahl von Sensoren entsprechen und angeben, ob der Sensor ein Ziel erkannt hat oder nicht, jeweils für jeden Sensor,
Berechnen (S12), unter Verwendung des Bayes'schen Netzwerks, einer Wahrscheinlichkeit, dass einer der Sensoren blockiert ist, und einer Wahrscheinlichkeit, dass ein Ziel in einem Sichtfeld mindestens eines, einiger oder aller der Mehrzahl von Sensoren vorhanden ist, und
Ausgeben (S13) einer Information, die den berechneten Wahrscheinlichkeiten entspricht, an das Fahrzeug, welches die Mehrzahl von Sensoren umfasst.

6. Verfahren nach Anspruch 5, wobei das Verfahren ferner umfasst:
Erzeugen (S14) eines Umgebungsmodells auf Grundlage der an das Fahrzeug ausgegebenen Information, wobei die Information den berechneten Wahrscheinlichkeiten entspricht.

7. Verfahren nach Anspruch 5 oder 6, wobei das Verfahren ferner umfasst:
Steuern des Fahrzeugs auf Grundlage der an das Fahrzeug ausgegebenen Information, wobei die Information den berechneten Wahrscheinlichkeiten entspricht.

8. Steuergerät, umfassend eine zentrale Blockade-Erkennungseinheit, die dazu ausgelegt ist, das Verfahren nach einem der Ansprüche 1 bis 4 und/oder das Verfahren nach einem der Ansprüche 5 bis 7 durchzuführen.

9. Fahrzeug, das mit dem Steuergerät ausgestattet ist und dazu ausgelegt ist, durch das Steuergerät nach Anspruch 8 gesteuert zu werden.

## Revendications

1. Procédé de génération d'un réseau bayésien configuré pour détecter un blocage d'une pluralité de capteurs d'un véhicule, chaque capteur de la pluralité de capteurs présentant un champ de vision, dans lequel chaque capteur est considéré comme bloqué si le champ de vision correspondant du capteur est limité en raison d'au moins une condition environnementale, qui n'est pas liée à la présence d'autres entités, dans un environnement du véhicule, et dans lequel le procédé comprend :
la détermination (S1) d'un ensemble de probabilités a priori sur la base de données historiques et/ou de données cartographiques correspondant au champ de vision d'au moins un, de certains ou de tous les capteurs de la pluralité de capteurs, dans lequel les données historiques sont indicatives de conditions dans lesquelles au moins un capteur de la pluralité de capteurs a été bloqué dans le passé et dans lequel l'ensemble de probabilités a priori comprend une probabilité a priori qu'une cible existe dans un champ de vision d'au moins un, de certains ou de tous les capteurs de la pluralité de capteurs,
pour chacun des capteurs de la pluralité de capteurs, respectivement, une probabilité a priori que le capteur est bloqué, et
pour chacun des capteurs de la pluralité de capteurs, respectivement, une probabilité a priori que le capteur n'est pas bloqué,
la détermination (S2) d'un ensemble de probabilités conditionnelles sur la base de l'au moins une condition environnementale dans un environnement du véhicule, chacune des probabilités conditionnelles comprenant une probabilité que le capteur de la pluralité de capteurs détecte et ne détecte pas la cible dans le champ de vision du capteur parmi toutes les combinaisons possibles de capteur bloqué et non bloqué et de présence ou d'absence de la cible dans le champ de vision du capteur, et
la génération (S3) du réseau bayésien sur la base de l'ensemble de probabilités a priori et de l'ensemble de probabilités conditionnelles.

2. Procédé selon la revendication 1, dans lequel au moins une partie de l'ensemble de probabilités a priori et/ou de l'ensemble de probabilités conditionnelles est déterminée sur la base de données historiques.

3. Procédé selon l'une quelconque des revendications 1 à 2, dans lequel au moins une partie de l'ensemble de probabilités a priori et/ou de l'ensemble de probabilités conditionnelles est déterminée sur la base de données cartographiques correspondant au champ de vision d'au moins un, de certains ou de tous les capteurs de la pluralité de capteurs.

4. Procédé selon l'une quelconque des revendications 1 à 3, dans lequel la génération (S3) du réseau bayésien comprend :
la génération de nœuds parents (1, 2, 3) comprenant un nœud de blocage (1, 3) pour chacun des capteurs de la pluralité de capteurs et un nœud cible (2), et de nœuds enfants (4, 5) comprenant un nœud de sortie (4, 5) pour chacun des capteurs,
dans lequel le nœud de blocage (1, 3) est généré pour chacun des capteurs de la pluralité de capteurs, respectivement, sur la base de la probabilité a priori que le capteur est bloqué, laquelle est fixée pour chacun des capteurs de la pluralité de capteurs, respectivement, et de la probabilité a priori que le capteur n'est pas bloqué, laquelle est fixée pour chacun des capteurs de la pluralité de capteurs, respectivement,
dans lequel le nœud cible (2) est généré sur la base de la probabilité a priori que la cible existe dans le champ de vision d'au moins un, de certains ou de tous les capteurs de la pluralité de capteurs, et
dans lequel le nœud de sortie (4, 5) est généré pour chacun des capteurs de la pluralité de capteurs, respectivement, sur la base de l'ensemble de probabilités conditionnelles, de la probabilité a priori que le capteur est bloqué, laquelle est fixée pour chacun des capteurs de la pluralité de capteurs, respectivement, et de la probabilité a priori que le capteur n'est pas bloqué, laquelle est fixée pour chacun des capteurs de la pluralité de capteurs, respectivement, et de la probabilité a priori que la cible existe dans le champ de vision d'au moins un, de certains ou de tous les capteurs de la pluralité de capteurs,
la génération d'arêtes reliant le nœud de blocage respectif (1, 3) d'un capteur au nœud de sortie respectif (4, 5) de ce capteur, et reliant le nœud cible (2) à tous les nœuds enfants (4, 5).

5. Procédé de détection d'un blocage de capteur utilisant le réseau bayésien configuré pour détecter un blocage de la pluralité de capteurs du véhicule et généré avec le procédé selon l'une quelconque des revendications 1 à 4, dans lequel le procédé de détection d'un blocage de capteur comprend :
l'entrée (S11), dans le réseau bayésien, d'une information correspondant à une sortie d'un des capteurs de la pluralité de capteurs indiquant si le capteur a détecté une cible ou non, respectivement pour chaque capteur,
le calcul (S12), à l'aide du réseau bayésien, d'une probabilité qu'un des capteurs est bloqué, et d'une probabilité qu'une cible existe dans un champ de vision d'au moins un, de certains ou de tous les capteurs de la pluralité de capteurs, et
la délivrance (S13) d'une information correspondant aux probabilités calculées au véhicule comprenant la pluralité de capteurs.

6. Procédé selon la revendication 5, dans lequel le procédé comprend en outre :
la génération (S14) d'un modèle d'environnement sur la base de l'information délivrée au véhicule, l'information correspondant aux probabilités calculées.

7. Procédé selon la revendication 5 ou 6, dans lequel le procédé comprend en outre :
la commande du véhicule sur la base de l'information délivrée au véhicule, l'information correspondant aux probabilités calculées.

8. Dispositif de commande comprenant une unité centrale de détection de blocage configurée pour mettre en œuvre le procédé selon l'une quelconque des revendications 1 à 4 et/ou le procédé selon l'une quelconque des revendications 5 à 7.

9. Véhicule équipé du dispositif de commande et configuré pour être commandé par le dispositif de commande selon la revendication 8.
